# EUROPEAN PATENT SPECIFICATION

(11) **EP 3 176 022 B1**
(45) Date of publication and mention of the grant of the patent: **29.12.2021**
(21) Application number: 14898663.1
(22) Date of filing: 30.07.2014
(51) Int. Cl.: B60K 1/04, B62D 47/02

(54) **BUS**
BUS
AUTOBUS

(43) Date of publication of application: 07.06.2017
(73) Proprietor: Creatio Irizar Group Innovation Center Aie, 20216 Ormaiztegi (Guipúzcoa) (ES)
(72) Inventor: HERRANZ LANDA, Gorka, 20216 Ormaiztegi (Guipúzcoa) (ES)
(74) Representative: Herrero & Asociados, S.L.
(86) International application number: PCT/ES2014/070618
(87) International publication number: WO 2016/016482

(56) References cited:
- WO-A1-97/08041
- CA-A1- 2 875 225
- CA-A1- 2 875 225
- CN-U- 203 221 858
- CN-U- 203 221 858
- CN-U- 203 221 860
- CN-U- 203 221 860
- KR-A- 20120 060 073
- US-A1- 2007 087 266
- US-A1- 2007 087 266
- US-A1- 2009 320 715
- US-A1- 2013 240 278

## Description

### Object of the Invention

The present invention relates to the field of electrically driven vehicles, and more specifically, to the field of bus-type vehicles incorporating at least one electric traction motor.

One object of the invention consists of providing a bus propelled by completely or partially electric means providing a more open inner compartment with more free space.

Another object of the invention is to provide a bus propelled by electric means improving the aerodynamics of the bus and eliminating the need for any type of projection in the upper part of the bus, which is conventionally required for housing electrical components.

Finally, another object of the invention is to provide a bus propelled by electric means with an improved appearance.

### Background of the Invention

The electric traction motor has been used in vehicles for years, both in hybrid vehicles and in completely electric vehicles.

Its usability has increased due to the advantages that these motors offer compared to conventional gasoline- or diesel-powered internal combustion engines. Among said advantages there is a decrease in contamination, in noise and in total cost associated with the operation thereof.

Nevertheless, motors of this type require enormous power to allow for traction of the vehicles incorporating them, which results in the need to use large sized batteries. Said batteries are very heavy elements and their location is critical for the dynamic behavior of the vehicle.

In that sense, the electric energy storage system has conventionally been located, in a concentrated manner, in the rear part of the vehicle, or in a separated manner in different positions of said vehicle, for the purpose of providing greater stability to the vehicle.

In that sense, for the case of large, bus-type vehicles, in which the energy demand is higher, a separate arrangement of the elements of the electric energy storage system predominates. The arrangement of the batteries of these electric energy storage systems has normally been in the rear part and in the upper part of the vehicle. The weight is therefore distributed, and the structural and dynamic effects caused by concentrating the weight are reduced.

In line with the foregoing, patent document ES2156768B1 describes a system for supplying energy to electrically operated vehicles, preferably for urban transport, that allows recharging batteries in each of the stops the bus makes. The invention thereby proposes frequently recharging the batteries for the purpose of allowing a reduction of the weight thereof. However, the bus fed by the described system would be a vehicle with limited autonomy, since operation thereof requires continuous recharging.

On the other hand, Chinese utility model CN203221858 describes an electric bus including a chassis, the chassis having a frame, a roof and a battery installation cabinet which is provided with a battery for powering the electric bus.

According to the foregoing, the inventions known up until now through the prior art do not provided a bus with an electric traction motor capable of solving the problems associated with the weight of the electric batteries, maintaining an ample compartment for passengers and a correct aerodynamic and dynamic behavior.

### Description of the Invention

The bus proposed by the present invention is therefore an improvement over what is known in the prior art since it satisfactorily meets the objectives indicated above as ideal in the art.

The invention consists of a bus comprising an electric traction motor, a front axis, a rear axis, a passenger compartment and an electric energy storage system capable of feeding the motor, wherein said energy storage system comprises at least two batteries located on top of the passenger compartment, such that most of the weight of each battery is located on the vertical of each axis. The bus further comprises an outer upper surface covering the batteries, most of which is substantially flat.

By locating the batteries on the front and rear axes of the bus, the invention frees up the inner space conventionally required for the storage thereof and achieves an increase in stability of the vehicle without the need to make significant structural modifications therein.

With the location of the batteries on top of the passenger compartment, the space previously required for the arrangement thereof is integrated in the compartment for passengers, resulting in a bus with more ample useful inner space, susceptible to offering more space to travelers and to therefore being more comfortable.

The separated location of the batteries, such that most of the weight of each of them is arranged on the vertical of each of the front and rear axes of the bus, offers a distribution of loads capable of better controlling pitching, which are typical during acceleration and braking operations, and rolling, which is typical when traveling on roads with curves.

Likewise, the arrangement of the batteries takes advantage of the reinforced structures of the bus, and therefore prevents the need to make significant structural modifications.

Furthermore, the bus comprises an outer upper surface covering the batteries, most of which is substantially flat. The bus therefore has a substantially flat ceiling, wherein the batteries are located in a lower plane, in a suspended ceiling formed for storing, between other elements, said batteries. The invention thereby prevents the possible unevenness in the ceiling caused by the location of elements, improving the aerodynamic behavior and the appearance of the bus.

According to a preferred embodiment, each battery will be part of a group of batteries, a first group of batteries arranged at least partially on the vertical of the front axis and a second group of batteries arranged at least partially on the vertical of the rear axis. The bus may therefore comprise a plurality or group of batteries on top of the passenger compartment, such that most of the weight of each group of batteries is arranged on the vertical of each of the axes.

Preferably, the energy storage system will comprise at least one supercapacitor susceptible to storing energy for feeding the motor. Preferably, the supercapacitor will be located on top of the passenger compartment, between the two batteries. In a particularly preferred manner, the supercapacitor will be adjacent to one of the batteries.

Preferably, the bus will comprise at least one voltage converter connected to at least one supercapacitor and/or to the batteries. In a preferred embodiment, said voltage converter will be located on top of the passenger compartment, between the two batteries. However, according to another preferred embodiment, the voltage converter will be located on top of the passenger compartment, in one of the overhangs of the bus.

According to another preferred embodiment, the bus will comprise a rack located on top of the passenger compartment and anchored to the side structure of the bus, wherein the batteries will be mounted on said rack.

Preferably, the bus will comprise climate control equipment located on top of the passenger compartment, between the two batteries. However, according to another preferred embodiment, the bus will comprise climate control equipment located on top of the passenger compartment, adjacent to one of the batteries.

Preferably, the bus will comprise a fuse box connected to the energy storage system, wherein according to a preferred embodiment, said fuse box will be located on top of the passenger compartment, between the two batteries. According to another preferred embodiment, said fuse box will be located on top of the passenger compartment, in one of the overhangs of the bus.

According to the preceding embodiments, the invention provides a preferred arrangement of heavier elements, in locations located on top of the passenger compartment, between batteries or in zones adjacent to same, and a preferred arrangement of lighter elements, in locations located on top of the passenger compartment, between batteries or in the overhangs of the bus, in the event that there is not enough space for housing said elements.

Accordingly, since the supercapacitor and the climate control equipment are heavy elements, they will preferably be located at the intermediate point between batteries, or in zones adjacent to same. However, since the voltage converter and the fuse box are lighter elements, they will preferably be located between batteries or in the overhangs of the bus.

The invention describes a complete arrangement of the possible elements involved in the electric traction of the bus, providing a bus with a substantially flat ceiling. Likewise, the invention describes the preferred location of these elements, which may be between the batteries of the electric energy storage system or in the overhangs of the bus in the event that they have a lower weight.

### Description of the Drawings

To complement the description that is being made and for the purpose of helping to better understand the features of the invention according to a preferred practical embodiment thereof, drawings are attached as an integral part of said description, wherein the following is depicted with an illustrative and non-limiting character:
Figure 1 shows a side perspective view of the bus according to a preferred embodiment of the invention.
Figure 2 shows a side view of the bus according to a preferred embodiment of the invention.
Figure 3 shows a side perspective view of the bus according to a preferred embodiment of the invention.
Figure 4 shows a front perspective view of a group of batteries mounted in a rack and anchored to the bus according to a preferred embodiment of the invention.
Figure 5 shows a detail view of the anchoring of the rack to the side structure of the bus according to a preferred embodiment of the invention.
Figure 6 shows a front schematic view of the rack anchored to the bus according to a preferred embodiment of the invention.

### Preferred Embodiment of the Invention

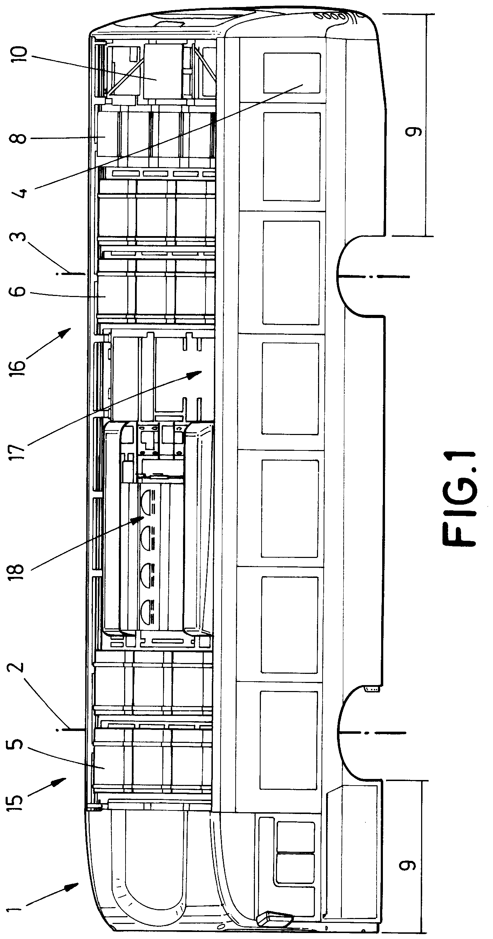

Figure 1 shows a bus 1 provided with a front axis 2, a rear axis 3, a passenger compartment 4 and an electric energy storage system capable of feeding an electric traction motor.

The electric energy storage system shown in Figure 1 comprises two groups of batteries 15, 16 and four supercapacitors 8. Both groups of batteries 15, 16 are located on top of the passenger compartment 4, such that most of the weight of each group of batteries 15, 16 is arranged on the vertical of each axis 2, 3. In that sense, the first group of batteries 15 is partially arranged on the vertical of the front axis 2, and the second group of batteries 16 on the vertical of the rear axis 3. Likewise, the four supercapacitors 8 comprised in the electric energy storage system are likewise located on top of the passenger compartment 4, adjacent to the second group of batteries 16.

Figure 1 in turn shows climate control equipment 18 and a fuse box 17 located on top of the passenger compartment 4, between the two groups of batteries 15, 16. The fuse box 17 is connected to the energy storage system and is in charge of protecting the energy storage system against electrical overloads.

Likewise, Figure 1 shows a voltage converter 10 located on top of the passenger compartment 4, in the overhang 9 posterior of the bus 1. The voltage converter 10 will preferably be connected to the supercapacitors 8 and/or to the first group of batteries 15 and second group of batteries 16.

With this design, the invention obtains an improved arrangement of elements because since the electrical components are located on top of the passenger compartment, the space normally taken up by said electrical components is freed up, resulting in a passenger compartment with greater effective space.

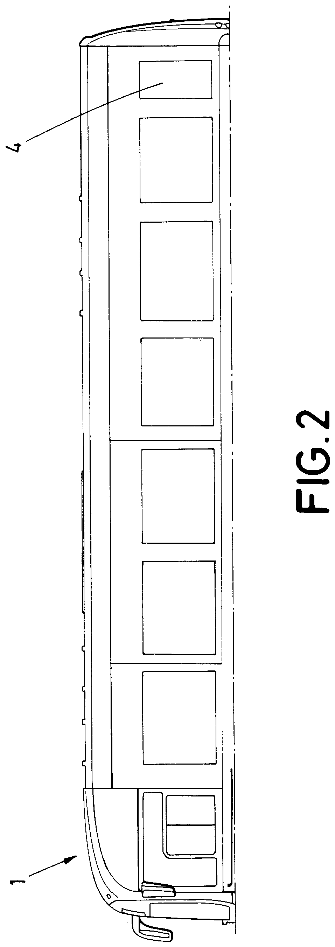

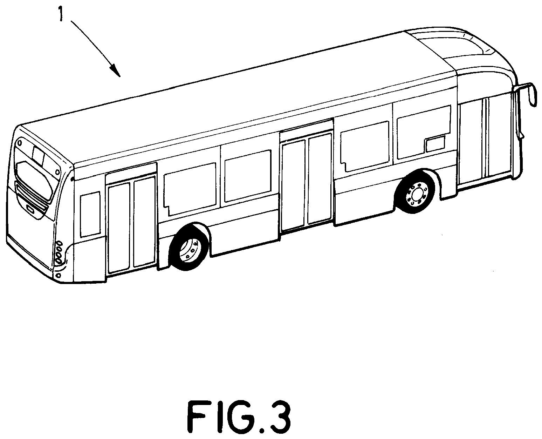

Figures 2 and 3 show a side view and a side perspective view of the bus 1 in which the bus 1 is seen to comprise a substantially flat outer upper surface. Said outer upper surface covers both the two groups of batteries 15, 16 and the remaining components located on top of the passenger compartment 4, among others and in the case of Figure 1, the four supercapacitors 8, the climate control equipment 18, the fuse box 17 and the voltage converter 10.

In that sense, the invention locates the two groups of batteries 15, 16 and the remaining components susceptible to being used for the electric traction or feed of the motor, as well as the climate control equipment, in a plane lower with respect to the plane defined by the outer upper surface. This arrangement of elements in a lower plane allows obtaining a bus 1 with an improved aerodynamic behavior due to the absence of projections on its outer upper surface. The absence of projections offers less drag to the forward movement of the bus.

At the same time and as a result of the arrangement of the invention, the bus 1 offers an improved appearance compared to a bus conventionally provided with projections on its outer upper surface. Likewise, the side appearance of the bus is improved as it presents an appearance that maintains the status quo therein.

In addition, by providing a bus having a substantially flat outer upper surface, the invention improves the dynamic behavior thereof since it allows channeling air more gently, reducing the turbulences caused.

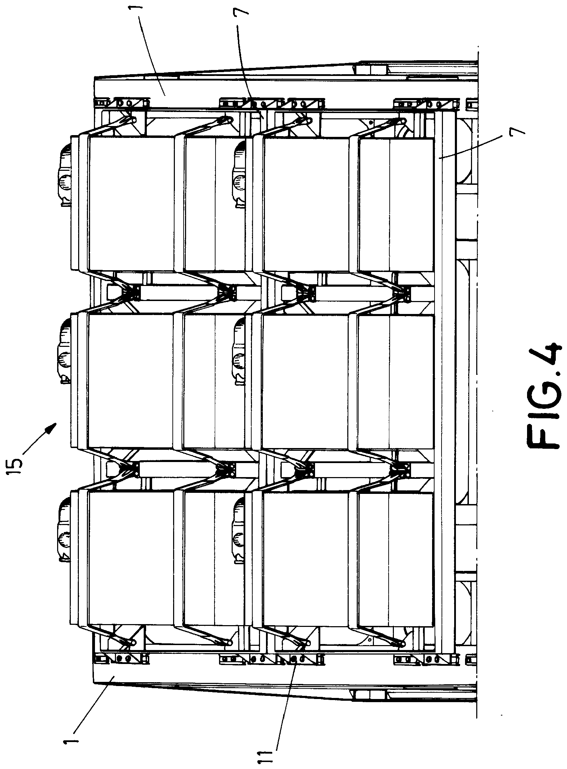

Figure 4 shows an elevational view of the first group of batteries 15 mounted in a par of racks 7. In Figures 1 and 4, each group of batteries is formed by six batteries, but more or fewer batteries could be housed depending on the energy demand required for the electric traction of the bus or on the size thereof. Likewise, more rows of batteries or more batteries per row could be housed, provided that most of the weight of each group of batteries is arranged on the vertical of the axis corresponding.

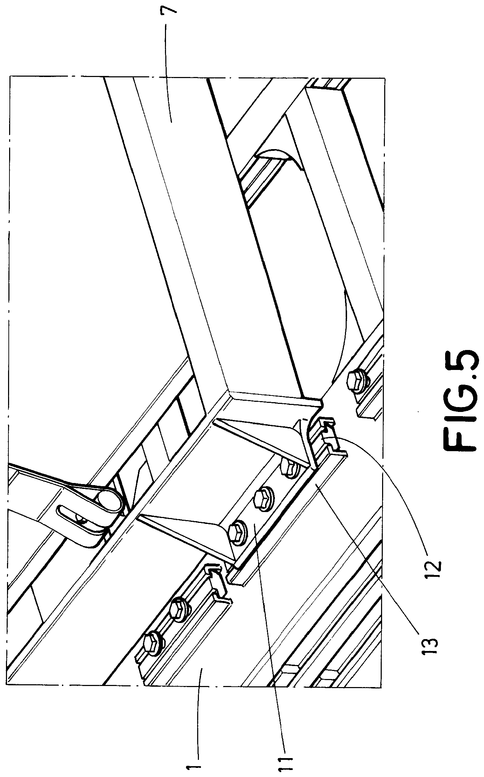

Figure 5 shows a detail view of an anchoring example between a rack 7 and the side structure of the bus 1. In that sense, the rack 7 can be provided with flats 11 on its side faces to enable supporting and anchoring it to the side structure of the bus 1, which can be provided with rails 13, susceptible to offering support to the flats 11 of the rack 7, and inserts 12 susceptible to internally completing the rails 13 and allowing the anchoring of the flats 11 to the bus 1 by means of a attachment, preferably with screws, between the flats 11 and the inserts 12. The rails 13 will be preferably arranged separated from one another along the side structure of the bus 1 to allow the discharge of different elements, primarily water, which may get into the lower part of the rack 7.

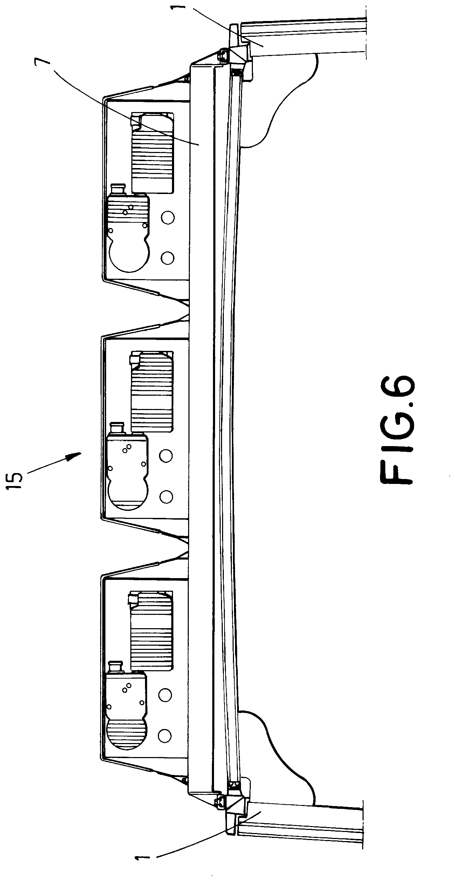

Figure 6 shows a front schematic view of the first group of batteries 15 mounted in a rack 7. Due to the weight of the batteries, supercapacitors and other elements, the invention contemplates the possibility of reinforcing the structure of the bus 1 for the purpose of providing greater stability to the bus 1. The upper weight raises the center of gravity of the bus 1, causing more pronounced pitching and rolling. To provide greater stability to the assembly, the invention contemplates an increase in the stiffness of the chassis of the bus for the purpose of allowing the transmission of forces to the axes, and an increase in the shock absorber stiffness, for the purpose of compensating for the preceding reinforcement. Likewise and preferably, the invention contemplates the possibility of installing stabilizer bars. Said stabilizer bars would be capable of distributing the force between the wheels of both sides, and for the case of rolling, it would mean that the non-loaded wheel (the inner wheel) maintains contact with the road at all times, while at the same time helping the loaded wheel (the outer wheel) generate the friction required for not going off the road.

Finally, in view of this description and the drawings, the person skilled in the art may understand that the invention has been described according to several preferred embodiments thereof, but that many variations can be introduced in said preferred embodiments without departing from the object of the invention as it is claimed.

## Claims

1. Bus (1) comprising an electric traction motor, a front axis (2), a rear axis (3), a passenger compartment (4) and an electric energy storage system capable of feeding the motor, whereby said energy storage system comprises at least two batteries (5, 6) located on top of the passenger compartment (4) such that most of the weight of each battery (5, 6) is arranged on the vertical of each axis (2, 3), and in that the bus (1) comprises a outer upper surface covering the batteries (5, 6), **characterized in that** the bus has a flat ceiling, wherein the batteries (5, 6) are located in a lower plane, in a suspended ceiling formed for storing said batteries (5, 6).

2. Bus (1) according to claim 1, **characterized in that** each battery (5, 6) is part of a group of batteries, a first group of batteries (15) arranged at least partially on the vertical of the front axis (2) and a second group of batteries (16) arranged at least partially on the vertical of the rear axis (3).

3. Bus (1) according to any of the preceding claims, **characterized in that** the energy storage system comprises at least one supercapacitor (8) susceptible to storing energy for feeding the motor.

4. Bus (1) according to claim 3, **characterized in that** the supercapacitor (8) is located on top of the passenger compartment (4), between the two batteries (5, 6).

5. Bus (1) according to any of claims 3-4, **characterized in that** the supercapacitor (8) is adjacent to one of the batteries (5, 6).

6. Bus (1) according to any of claims 3-5, **characterized in that** the bus (1) comprises at least one voltage converter (10) connected to the supercapacitor (8) and/or to the batteries (5, 6), being said voltage converter (10) located on top of the passenger compartment (4), between the two batteries (5, 6).

7. Bus (1) according to any of claims 3-5, **characterized in that** the bus (1) comprises at least one voltage converter (10) connected to the supercapacitor (8) and/or to the batteries (5, 6), said voltage converter (10) located on top of the passenger compartment (4), in one of the overhangs (9) of the bus (1).

8. Bus (1) according to any of the preceding claims, **characterized in that** the bus (1) comprises a rack (7) located on top of the passenger compartment (4) and anchored to the side structure of the bus (1), and **in that** the batteries (5, 6) are mounted on said rack (7).

9. Bus (1) according to claim 8, **characterized in that** the bus (1) comprises a plurality of rails (13) on its side structure serving to support the rack (7), wherein said rails (13) are arranged separated from one another.

10. Bus (1) according to any of the preceding claims, **characterized in that** the bus (1) comprises climate control equipment (18) located on top of the passenger compartment (4), between the two batteries (5, 6).

11. Bus (1) according to any of claims 1-9, **characterized in that** the bus (1) comprises climate control equipment (18) located on top of the passenger compartment (4), adjacent to one of the batteries (5, 6).

12. Bus (1) according to any of the preceding claims, **characterized in that** the bus (1) comprises a fuse box (17) connected to the energy storage system, wherein said fuse box (17) is located on top of the passenger compartment (4), between the two batteries (5, 6).

13. Bus (1) according to any of claims 1-11, **characterized in that** the bus (1) comprises a fuse box (17) connected to the energy storage system, wherein said fuse box (17) is located on top of the passenger compartment (4), in one of the overhangs (9) of the bus (1).

## Patentansprüche

1. Bus (1), umfassend einen elektrischen Fahrmotor, eine Vorderachse (2), eine Hinterachse (3), einen Fahrgastraum (4) und ein elektrisches Energiespeichersystem, das den Motor speisen kann, wobei das Energiespeichersystem wenigstens zwei Batterien (5, 6) umfasst, die oben auf dem Fahrgastraum (4) angebracht sind, so dass der größte Teil des Gewichts jeder Batterie (5, 6) auf der Vertikalen jeder Achse (2, 3) angeordnet ist, und der Bus (1) eine äußere Oberseite umfasst, die die Batterien (5, 6) abdeckt, **dadurch gekennzeichnet, dass** der Bus eine flache Decke aufweist, wobei sich die Batterien (5, 6) in einer unteren Ebene in einer abgehängten Decke befinden, die zur Lagerung der Batterien (5, 6) gebildet ist.

2. Bus (1) nach Anspruch 1, **dadurch gekennzeichnet, dass** jede Batterie (5, 6) Teil einer Gruppe von Batterien ist, wobei eine erste Gruppe von Batterien (15) wenigstens teilweise auf der Vertikalen der Vorderachse (2) angeordnet ist und eine zweite Gruppe von Batterien (16) wenigstens teilweise auf der Vertikalen der Hinterachse (3) angeordnet ist.

3. Bus (1) nach einem der vorhergehenden Ansprüche, **dadurch gekennzeichnet, dass** das Energiespeichersystem wenigstens einen Superkondensator (8) umfasst, der Energie zum Speisen des Motors speichern kann.

4. Bus (1) nach Anspruch 3, **dadurch gekennzeichnet, dass** sich der Superkondensator (8) oben auf dem Fahrgastraum (4) zwischen den beiden Batterien (5, 6) befindet.

5. Bus (1) nach einem der Ansprüche 3 bis 4, **dadurch gekennzeichnet, dass** der Superkondensator (8) an eine der Batterien (5, 6) angrenzt.

6. Bus (1) nach einem der Ansprüche 3 bis 5, **dadurch gekennzeichnet, dass** der Bus (1) wenigstens einen Spannungswandler (10) umfasst, der mit dem Superkondensator (8) und / oder den Batterien (5, 6) verbunden ist, wobei der Spannungswandler (10) oben auf dem Fahrgastraum (4) zwischen den beiden Batterien (5, 6) angeordnet ist.

7. Bus (1) nach einem der Ansprüche 3 bis 5, **dadurch gekennzeichnet, dass** der Bus (1) wenigstens einen Spannungswandler (10) umfasst, der mit dem Superkondensator (8) und / oder den Batterien (5, 6) verbunden ist, wobei der Spannungswandler (10) oben auf dem Fahrgastraum (4) in einem der Überstände (9) des Busses (1) angeordnet ist.

8. Bus (1) nach einem der vorhergehenden Ansprüche, **dadurch gekennzeichnet, dass** der Bus (1) ein Gestell (7) umfasst, das sich oben auf dem Fahrgastraum (4) befindet und an der Seitenkonstruktion des Busses (1) verankert ist, und dass die Batterien (5, 6) an dem Gestell (7) montiert sind.

9. Bus (1) nach Anspruch 8, **dadurch gekennzeichnet, dass** der Bus (1) eine Vielzahl von Schienen (13) an seiner Seitenkonstruktion umfasst, die dazu dienen, das Gestell (7) abzustützen, wobei die Schienen (13) getrennt voneinander angeordnet sind.

10. Bus (1) nach einem der vorhergehenden Ansprüche, **dadurch gekennzeichnet, dass** der Bus (1) ein Klimaregelungssystem (18) umfasst, das oben auf dem Fahrgastraum (4) zwischen den beiden Batterien (5, 6) angeordnet ist.

11. Bus (1) nach einem der Ansprüche 1 bis 9, **dadurch gekennzeichnet, dass** der Bus (1) ein Klimaregelungssystem (18) umfasst, das oben auf dem Fahrgastraum (4) angrenzend an eine der Batterien (5, 6) angeordnet ist.

12. Bus (1) nach einem der vorhergehenden Ansprüche, **dadurch gekennzeichnet, dass** der Bus (1) einen Sicherungskasten (17) umfasst, der mit dem Energiespeichersystem verbunden ist, wobei der Sicherungskasten (17) oben auf dem Fahrgastraum (4) zwischen den beiden Batterien (5, 6) angeordnet ist.

13. Bus (1) nach einem der Ansprüche 1 bis 11, **dadurch gekennzeichnet, dass** der Bus (1) einen Sicherungskasten (17) umfasst, der mit dem Energiespeichersystem verbunden ist, wobei der Sicherungskasten (17) oben auf dem Fahrgastraum (4) in einem der Überstände (9) des Busses (1) angeordnet ist.

## Revendications

1. Autobus (1) comprenant un moteur de traction électrique, un axe (2) avant, un axe (3) arrière, un compartiment (4) de passager et un système d'accumulation d'énergie électrique apte à alimenter le moteur, dans lequel le système d'accumulation d'énergie comprend au moins deux accumulateurs (5, 6) disposés au sommet du compartiment (4) de passager, de manière à ce que la plus grande partie du poids de chaque accumulateur (5, 6) se trouve sur la verticale de chaque axe (2, 3) et en ce que l'autobus (1) comprend une surface supérieure extérieure recouvrant les accumulateurs (5, 6), **caractérisé en ce que** l'autobus a un plafond plat, dans lequel les accumulateurs (5, 6) sont placés dans un plan inférieur, dans un plafond suspendu formé pour loger les accumulateurs (5, 6).

2. Autobus (1) suivant la revendication 1, **caractérisé en ce que** chaque accumulateur (5,6) fait partie d'un groupe d'accumulateurs, un premier groupe d'accumulateurs (15) étant disposé au moins en partie sur la verticale de l'axe (2) avant et un deuxième groupe d'accumulateurs (16) étant disposé au moins en partie sur la verticale de l'axe (3) arrière.

3. Autobus (1) suivant l'une quelconque des revendications précédentes, **caractérisé en ce que** le système d'accumulation d'énergie comprend au moins un supercondensateur (8) apte à emmagasiner de l'énergie pour alimenter le moteur.

4. Autobus (1) suivant la revendication 3, **caractérisé en ce que** le supercondensateur (8) est placé au sommet du compartiment (4) de passager entre les deux accumulateurs (5, 6).

5. Autobus (1) suivant l'une quelconque des revendications 3 à 4, **caractérisé en ce que** le supercondensateur (8) est voisin de l'un des accumulateurs (5, 6).

6. Autobus (1) suivant l'une quelconque des revendications 3 à 5, **caractérisé en ce que** l'autobus (1) comprend au moins un convertisseur (10) de tension connecté aux accumulateurs (5, 6), le convertisseur (10) de tension étant placé au sommet du compartiment (4) de passager entre les deux accumulateurs (5, 6).

7. Autobus (1) suivant l'une quelconque des revendications 3 à 5, **caractérisé en ce que** l'autobus (1) comprend au moins un convertisseur (10) de tension connecté au supercondensateur (8) et/ou aux accumulateurs (5, 6), le convertisseur (10) de tension étant placé au sommet du compartiment (4) de passager dans l'un des porte-à-faux (9) de l'autobus (1).

8. Autobus (1) suivant l'une quelconque des revendications précédentes, **caractérisé en ce que** l'autobus (1) comprend une galerie (7) placée au sommet du compartiment (4) de passager et arrimée à la structure latérale de l'autobus (1) et **en ce que** les accumulateurs (5, 6) sont montés sur la galerie (7).

9. Autobus (1) suivant la revendication 8, **caractérisé en ce que** l'autobus (1) comprend une pluralité de rails (13) sur sa structure latérale servant à supporter la galerie (7), dans lequel les rails (13) sont disposés en étant séparés les uns des autres.

10. Autobus (1) suivant l'une quelconque des revendications précédentes, **caractérisé en ce que** l'autobus (1) comprend un équipement (18) de conditionnement d'air, placé au sommet du compartiment (4) de passager entre les deux batteries (5, 6).

11. Autobus (1) suivant l'une quelconque des revendications 1 à 9, **caractérisé en ce que** l'autobus (1) comprend un équipement (18) de conditionnement d'air, placé au sommet du compartiment (4) de passager au voisinage de l'un des accumulateurs (5, 6).

12. Autobus (1) suivant l'une quelconque des revendications précédentes, **caractérisé en ce que** l'autobus (1) comprend une boîte à fusible (17) connectée au système d'accumulation d'énergie, dans lequel la boîte (17) à fusible est placée au sommet du compartiment (4) de passager entre les deux accumulateurs (5, 6).

13. Autobus (1) suivant l'une quelconque des revendications 1 à 11, **caractérisé en ce que** l'autobus (1) comprend une boîte (17) à fusible connectée au système d'accumulation d'énergie, dans lequel la boîte (17) à fusible est placée au sommet du compartiment (4) de passager dans l'un des porte-à-faux (9) de l'autobus (1).
